# EUROPEAN PATENT APPLICATION

(11) **EP 4 506 808 A2**
(43) Date of publication of application: **12.02.2025**
(21) Application number: 24219128.6
(22) Date of filing: 11.12.2024
(51) Int. Cl.: G06F 7/544

(54) **METHOD AND APPARATUS FOR PROCESSING FEATURE DATA THROUGH MULTIPLY-ACCUMULATE ARRAY**

(30) Priority: 12.12.2023 CN 202311706702
(71) Applicant: Beijing Horizon Information Technology Co., Ltd., Beijing 100094 (CN)
(72) Inventor: DING, Jinnan, Beijing, 100094 (CN); WEI, Zhenqi, Beijing, 100094 (CN)
(74) Representative: Patentanwälte Magenbauer & Kollegen Partnerschaft mbB

(57) **Abstract**

Embodiments of this disclosure disclose a method and an apparatus for processing feature data through a multiply-accumulate array. The method includes: determining encoded data corresponding to to-be-processed feature data; calculating the encoded data corresponding to to-be-processed feature data and weight data by using a first calculation array in the multiply-accumulate array, to obtain a first set of calculation results corresponding to the encoded data; compressing a part of calculation results in the first set of calculation results by using at least two second calculation arrays in the multiply-accumulate array to obtain compression results respectively corresponding to the second calculation arrays, wherein each part of calculation results includes at least one calculation result in the first set of calculation results; and accumulating the compression results respectively corresponding to second calculation arrays by using an accumulator of the multiply-accumulate array, to obtain a processing result corresponding to the to-be-processed feature data.

## Description

### FIELD OF THE INVENTION

This disclosure relates to technologies of artificial intelligence, and in particular, to a method and an apparatus for processing feature data through a multiply-accumulate array.

### BACKGROUND OF THE INVENTION

In artificial intelligence computing, there are usually a large number of multiplication and addition (multiply-accumulate for short) calculations, such as convolution operations and matrix multiplication operations. Each operation requires a certain amount of power consumption. In related technologies, a hardware structure and a logical expression of a multiply-accumulate array for multiply-accumulate calculations are usually optimized, so as to reduce power consumption. However, the multiply-accumulate array obtained through optimization in the related technologies has limited effects in reducing power consumption in different application scenarios, making it impossible to perform in-depth power consumption optimization for specific application scenarios.

### SUMMARY OF THE INVENTION

To resolve the foregoing technical problems of limited effects in reducing power consumption in different application scenarios and poor commonality, embodiments of this disclose provide a method and an apparatus for processing feature data through a multiply-accumulate array.

According to a first aspect of this disclosure, a method of processing feature data through a multiply-accumulate array is provided, including: determining encoded data corresponding to to-be-processed feature data; calculating the encoded data corresponding to the to-be-processed feature data and weight data by using a first calculation array in the multiply-accumulate array, to obtain a first set of calculation results corresponding to the encoded data; compressing a part of calculation results in the first set of calculation results by using at least two second calculation arrays in the multiply-accumulate array, respectively, to obtain compression results respectively corresponding to the second calculation arrays, wherein each part of calculation results includes at least one calculation result in the first set of calculation results; and accumulating the compression results respectively corresponding to the second calculation arrays by using an accumulator of the multiply-accumulate array, to obtain a processing result corresponding to the to-be-processed feature data.

According to a second aspect of this disclosure, an apparatus for processing feature data through a multiply-accumulate array is provided, including: a determining module, configured to determine encoded data corresponding to to-be-processed feature data; a first processing module, configured to calculate the encoded data corresponding to the to-be-processed feature data and weight data by using a first calculation array in the multiply-accumulate array, to obtain a first set of calculation results corresponding to the encoded data; a second processing module, configured to compress a part of calculation results in the first set of calculation results by using at least two second calculation arrays in the multiply-accumulate array to obtain compression results respectively corresponding to the second calculation arrays, wherein each part of calculation results includes at least one calculation result in the first set of calculation results; and a third processing module, configured to accumulate the compression results respectively corresponding to the second calculation arrays by using an accumulator of the multiply-accumulate array, to obtain a processing result corresponding to the to-be-processed feature data.

According to a third aspect of this disclosure, a computer readable storage medium is provided. The storage medium stores a computer program, and the computer program is used for implementing the method of processing feature data through a multiply-accumulate array according to any one of the foregoing embodiments of this disclosure.

According to a fourth aspect of this disclosure, an electronic device is provided. The electronic device includes: a processor; and a memory configured to store a processor-executable instruction. The processor is configured to read the executable instruction from the memory, and execute the instruction to implement the method of processing feature data through a multiply-accumulate array according to any one of the foregoing embodiments of this disclosure.

According to a fifth aspect of this disclosure, a computer program product is provided. When instructions in the computer program product are executed by a processor, the method of processing feature data through a multiply-accumulate array according to any one of the foregoing embodiments of this disclosure is implemented.

Based on the method and the apparatus for processing feature data through a multiply-accumulate array that are provided in the embodiments of this disclosure, after the encoded data corresponding to the to-be-processed feature data is determined, the encoded data corresponding to the to-be-processed feature data and the weight data may be calculated by using the first calculation array in the multiply-accumulate array, to obtain the first set of calculation results corresponding to the encoded data; a part of calculation results in the first set of calculation results are compressed by using at least two second calculation arrays in the multiply-accumulate array to obtain the compression results respectively corresponding to the second calculation arrays; and the compression results respectively corresponding to the second calculation arrays are accumulated by using the accumulator of the multiply-accumulate array, to obtain the processing result corresponding to the to-be-processed feature data. In the embodiments of this disclosure, the first set of calculation results is divided into at least two parts, so that each part is compressed respectively by using at least two second calculation arrays, which helps to compress some with similar signal toggling probabilities of the first set of calculation results in the first calculation array by using a same second calculation array. Calculation results with significant differences in signal toggling probabilities are compressed by using different second calculation arrays, so that an overall signal toggling rate of a multiply-accumulate array circuit is reduced, thereby effectively reducing power consumption of the multiply-accumulate array.

### BRIEF DESCRIPTION OF THE DRAWINGS

FIG. 1 shows an exemplary application scenario of a method of processing feature data through a multiply-accumulate array according to this disclosure;
FIG. 2 is a schematic flowchart of a method of processing feature data through a multiply-accumulate array according to an exemplary embodiment of this disclosure;
FIG. 3 is a schematic flowchart of a method of processing feature data through a multiply-accumulate array according to another exemplary embodiment of this disclosure;
FIG. 4 is a schematic flowchart of a method of processing feature data through a multiply-accumulate array according to still another exemplary embodiment of this disclosure;
FIG. 5 is a schematic flowchart of a method of processing feature data through a multiply-accumulate array according to yet another exemplary embodiment of this disclosure;
FIG. 6 is a schematic flowchart of a method of processing feature data through a multiply-accumulate array according to still yet another exemplary embodiment of this disclosure;
FIG. 7 is a schematic flowchart of a method of processing feature data through a multiply-accumulate array according to a further exemplary embodiment of this disclosure;
FIG. 8 is a schematic diagram of a structure of an apparatus for processing feature data through a multiply-accumulate array according to an exemplary embodiment of this disclosure;
FIG. 9 is a schematic diagram of a structure of an apparatus for processing feature data through a multiply-accumulate array according to another exemplary embodiment of this disclosure;
FIG. 10 is a schematic diagram of a structure of an apparatus for processing feature data through a multiply-accumulate array according to still another exemplary embodiment of this disclosure;
FIG. 11 is a schematic diagram of a structure of an apparatus for processing feature data through a multiply-accumulate array according to yet another exemplary embodiment of this disclosure;
FIG. 12 is a schematic diagram of a structure of an apparatus for processing feature data through a multiply-accumulate array according to still yet another exemplary embodiment of this disclosure;
FIG. 13 is a schematic diagram of a structure of an apparatus for processing feature data through a multiply-accumulate array according to a further exemplary embodiment of this disclosure; and
FIG. 14 is a diagram of a structure of an electronic device according to an embodiment of this disclosure.

### DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

### Overview of this disclosure

In a process of implementing this disclosure, the inventor finds that in artificial intelligence computing, there are usually a large number of multiplication and accumulation (multiply-add for short) calculations, such as convolution operations and matrix multiplication operations. Each operation requires a certain amount of power consumption. In related technologies, a hardware structure and a logical expression of a multiply-accumulate array for multiply-add calculations are usually optimized, so as to reduce power consumption. However, the multiply-accumulate array obtained through optimization in the related technologies has limited effects in reducing power consumption in different application scenarios, making it impossible to perform in-depth power consumption optimization for specific application scenarios.

### Exemplary overview

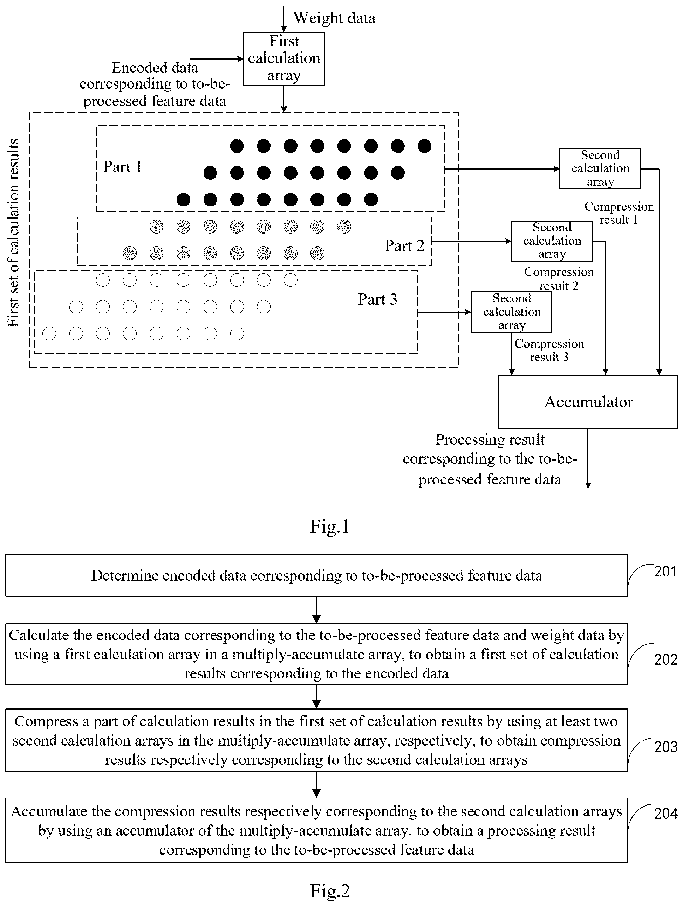

FIG. 1 shows an exemplary application scenario of a method of processing feature data through a multiply-accumulate array according to this disclosure. As shown in FIG. 1, after encoded data corresponding to to-be-processed feature data is determined, the encoded data corresponding to the to-be-processed feature data and weight data may be calculated by using a first calculation array in the multiply-accumulate array, to obtain a first set of calculation results corresponding to the encoded data. The first set of calculation results includes a plurality of calculation results, and dots in each row in FIG. 1 represent one calculation result. Each dot in each calculation result represents a bit of that calculation result. For example, a calculation result in a first row is 01011101. Herein, an example in which the calculation result has 8 significant bits is used. In practical applications, significant bits of each calculation result are not limited to 8 bits, and may be, for example, 16 bits or 32 bits. This may be set according to performance requirements of the multiply-accumulate array and processing requirements for the feature data. Each calculation result may be obtained by calculating a corresponding bit of the encoded data corresponding to the to-be-processed feature data and each bit of the weight data. For example, if the encoded data is 01001011 and the weight data is 10110111, an AND operation is performed on each bit of the encoded data and each bit of the weight data, respectively, to obtain a calculation result corresponding to that bit of the encoded data. For example, an AND operation is performed on 1 at a least significant bit of the encoded data and the weight data, so as to obtain a calculation result of 10110111 in a first row of a part 1. Dots of different gray scales (including three gray scales, that is, black, gray, and white in FIG. 1) represent different parts of calculation results obtained by dividing the first set of calculation results, and each part of calculation results corresponds to one second calculation array. Each part of calculation results of the first set of calculation results is compressed respectively by using at least two second calculation arrays (in FIG. 1, an example of three second calculation arrays is used) in the multiply-accumulate array, to obtain compression results respectively corresponding to the second calculation arrays, that is, a compression result 1, a compression result 2, and a compression result 3. The compression results respectively corresponding to the second calculation arrays are accumulated by using an accumulator of the multiply-accumulate array, to obtain a processing result corresponding to the to-be-processed feature data. In this disclosure, the first set of calculation results is divided into at least two parts, so that each part is compressed separately by using at least two second calculation arrays, which helps to compress some with similar signal toggling probabilities of the first set of calculation results by using a same second calculation array. Calculation results with significant differences in signal toggling probability are compressed by using different second calculation arrays, so that overall signal toggling of a multiply-accumulate array circuit is reduced, thereby effectively reducing power consumption. The signal toggling probability includes a toggling probability corresponding to each bit of encoded data of input feature data that needs to be calculated by the multiply-accumulate array in applications. The toggling probability corresponding to each bit may be obtained through statistical collection for sample feature data in specific application scenarios of the multiply-accumulate array. For example, in autonomous driving scenarios, if the multiply-accumulate array is used for convolution operations on an image feature, statistics about a signal toggling probability of each bit may be collected based on image features that correspond to a batch of sample images and need to be calculated by using the multiply-accumulate array, which may be used for dividing the second calculation arrays of the multiply-accumulate array. For example, regarding 100 pieces of 8-bit sample feature data, for each bit, statistics about a signal toggling probability on that bit in the 100 pieces of sample feature data is collected. To be specific, it is a toggle from 0 to 1, and it is a toggle from 1 to 0. A same bit in the 100 pieces of sample feature data is arranged in a sequence, and a quantity of toggles from 0 to 1 and from 1 to 0 are counted. A ratio of the quantity of toggles to 100 (or 99) is used as a toggling probability. Simply taking 4 pieces of sample feature data as an example, if least significant bits of encoded data corresponding to the 4 pieces of sample feature data are 0, 1, 1, and 0, a signal experiences two toggles, and a toggling probability may be expressed as 1/2. Based on this, at least two second calculation arrays may be disposed according to the toggling probability of each bit, to classify calculation results of bits with similar toggling probabilities into a same part, so as to reduce an overall signal toggling probability of the multiply-accumulate array during operation. For example, regarding higher-order bits corresponding to the to-be-processed feature data in a part 3, usually a signal toggling probability of each bit in the higher-order bits of the to-be-processed feature data relative to an feature value of an adjacent period is less than a probability threshold (such as 0.1). This helps to reduce power consumption of the second calculation array in the part 3, thereby reducing overall power consumption of the multiply-accumulate array circuit. In view of the above, the method in this disclosure may perform in-depth power consumption optimization on the multiply-accumulate array according to specific situations of feature data in a specific application scenario.

### Exemplary method

FIG. 2 is a schematic flowchart of a method of processing feature data through a multiply-accumulate array according to an exemplary embodiment of this disclosure. This embodiment may be applicable to an electronic device, such as an in-car computing platform. As shown in FIG. 2, the method includes the following steps.

Step 201. Determine encoded data corresponding to to-be-processed feature data.

In some optional embodiments, the to-be-processed feature data may be any data on which a multiply-add calculation is to be performed, such as feature data on which a convolution operation is to be performed, feature data on which a matrix multiplication operation is to be performed, or feature data on which a dot product operation is to be performed. The encoded data corresponding to the to-be-processed feature data may refer to a binary-coded representation of the to-be-processed feature data. A specific encoding method may be determined according to specific situations of the to-be-processed feature data. Encoding methods may include a sign-and-magnitude encoding, a ones' complement encoding, and a two's complement encoding.

Step 202. Calculate the encoded data corresponding to the to-be-processed feature data and weight data by using a first calculation array in the multiply-accumulate array, to obtain a first set of calculation results corresponding to the encoded data.

In some optional embodiments, the first calculation array is a calculation array for calculating a multiplication operation of the encoded data and the weight data. The weight data may be encoded binary code.

In some optional embodiments, the first set of calculation results may include a plurality of calculation results, and a specific quantity of the calculation results may be same as a quantity of bits in the encoded data. To be specific, each bit in the encoded data is multiplied with each bit in the weight data to obtain a calculation result. For example, a least significant bit of the encoded data is 1, and the encoded data is multiplied with weight data 10110111. Thus, a calculation result 10110111 corresponding to the least significant bit is obtained. According to a multiplication operation rule, as shown in FIG. 1, calculation results of different bits of the encoded data need to be aligned in a staggering way. For example, a second least significant bit of the encoded data is also 1, and the calculation result 10110111 obtained is aligned with the calculation result 10110111 corresponding to the least significant bit in a staggering way. This is equivalent to that one 0 is added after the least significant bit of the calculation result of the second least significant bit to obtain 101101110, and a least significant bit of 101101110 is aligned with a least significant bit of the calculation result 10110111 of the least significant bit.

In some optional embodiments, the weight data may be determined according to specific operations. For example, for a convolution operation, the weight data may be a pre-obtained convolution weight. For a matrix multiplication operation, the weight data may be determined based on one of two matrices that are going to perform the matrix multiplication operation.

In some optional embodiments, the to-be-processed feature data may include one or more to-be-calculated feature values. The weight data may include weight values corresponding to all feature values of the to-be-processed feature data. For example, regarding the matrix multiplication operation, the to-be-processed feature data may include various elements of a first matrix, and each element is used as one feature value in the to-be-processed feature data. According to a rule for the matrix multiplication operation, the weight value corresponding to each feature value of the to-be-processed feature data is determined from elements of a second matrix.

In some optional embodiments, the first calculation array may include a set of calculation units that form a first calculation array according to a certain arrangement rule. Each calculation unit may calculate a result obtained by multiplying one bit of the encoded data with one bit of the weight data.

In some optional embodiments, the first calculation array may calculate the encoded data and the weight data under control of a control instruction, to obtain the first set of calculation results corresponding to the encoded data. The control instruction may be triggered by an external controller of the multiply-accumulate array.

Step 203. Compress a part of calculation results in the first set of calculation results by using at least two second calculation arrays in the multiply-accumulate array, respectively, to obtain compression results respectively corresponding to the second calculation arrays.

In some optional embodiments, each part of calculation results in the first set of calculation results includes at least one calculation result in the first set of calculation results.

In some optional embodiments, the second calculation array may be implemented in any feasible way. For example, the second calculation array may be implemented based on a compressor, such as a 3-2 compressor or a 4-2 compressor, ect.

In some optional embodiments, the compression result corresponding to any second calculation array may include a data result and a carry result. The data result refers to a sum without carry of the part of calculation results calculated by the second calculation array. For example, a compression result of 11 and 110 (where 0 is a complement) may be represented by using 101 without considering other bits. A carry generated is reflected in the carry result.

In some optional embodiments, a quantity of the second calculation arrays and a specific structure of each second calculation array may be determined based on feature data of practical application scenario of the multiply-accumulate array. Specifically, statistics about a signal toggling probability of batch sample feature data that needs to be calculated by using the multiply-accumulate array in the application scenario may be pre-collected. The quantity of the second calculation arrays and the structure of each second calculation array are determined based on the signal toggling probability. For the signal toggling probability, reference may be made to the content described above.

Step 204. Accumulate the compression results respectively corresponding to the second calculation arrays by using an accumulator of the multiply-accumulate array, to obtain a processing result corresponding to the to-be-processed feature data.

In some optional embodiments, the processing result corresponding to the to-be-processed feature data may include a multiplication result of each feature value in the to-be-processed feature data and a weight value corresponding to the feature value. The processing result may also include a multiply-accumulate result of a plurality of feature value values and weight values respectively corresponding to the plurality of feature value values, such as a convolution operation result or a matrix multiplication operation result. The specific processing result corresponding to the to-be-processed feature data may be set according to actual computing requirements.

In some optional embodiments, after being obtained, the compression results respectively corresponding to the second calculation arrays are accumulated to obtain a multiplication result of the to-be-processed feature data, which may be used as the processing result corresponding to the to-be-processed feature data.

In some optional embodiments, the to-be-processed feature data includes a plurality of feature values. When a multiply-accumulate operation on a plurality of feature values and weight values needs to be completed, for each feature value, a processing result corresponding to each feature value may be obtained, and thus processing results respectively corresponding to the feature values may be accumulated to implement the multiply-accumulate operation on the plurality of feature values and weight values. For example, in the matrix multiplication operation, the to-be-processed feature data includes the first matrix, and the elements of the second matrix are used as the weight data. A multiply-accumulate operation on a plurality of elements aik (k=1, 2, ..., or n, wherein n represents a quantity of columns in the first matrix) in any row i of the first matrix and a plurality of elements bkj in any column j of the second matrix may be implemented according to the method in the embodiments of this disclosure, so as to obtain a multiplication result of each element aik in the row i of the first matrix and the corresponding element bkj in the column j of the second matrix. By accumulating multiplication results of all elements in the row i of the first matrix, a multiply-accumulate result of the row i of the first matrix and the column j of the second matrix may be obtained. Based on this, a matrix multiplication operation on the first matrix and the second matrix may be implemented to obtain a matrix multiplication result, which is used as the processing result corresponding to the to-be-processed feature data.

In some optional embodiments, each multiply-accumulate array may perform a multiplication operation on one feature value and a corresponding weight value each time. Thus, parallel processing may be achieved through a plurality of multiply-accumulate arrays, thereby greatly improving processing efficiency of the multiply-accumulate arrays. The method in the embodiments of this disclosure may be implemented by each multiply-accumulate array.

According to the method of processing feature data through a multiply-accumulate array that are provided in the embodiments of this disclosure, after the encoded data corresponding to the to-be-processed feature data is determined, the encoded data corresponding to the to-be-processed feature data and the weight data may be calculated by using the first calculation array in the multiply-accumulate array, to obtain the first set of calculation results corresponding to the encoded data; a part of calculation results in the first set of calculation results are compressed by using at least two second calculation arrays in the multiply-accumulate array to obtain the compression results respectively corresponding to the second calculation arrays; and the compression results respectively corresponding to the second calculation arrays are accumulated by using the accumulator of the multiply-accumulate array, to obtain the processing result corresponding to the to-be-processed feature data. In the embodiments of this disclosure, the first set of calculation results is divided into at least two parts, so that each part is compressed separately by using at least two second calculation arrays, respectively, which helps to compress some with similar signal toggling probabilities of the first set of calculation results in the first calculation array by using a same second calculation array. Calculation results with significant differences in signal toggling probabilities are compressed by using different second calculation arrays, so that an overall signal toggling rate of a multiply-accumulate array circuit is reduced, thereby effectively reducing power consumption of the multiply-accumulate array.

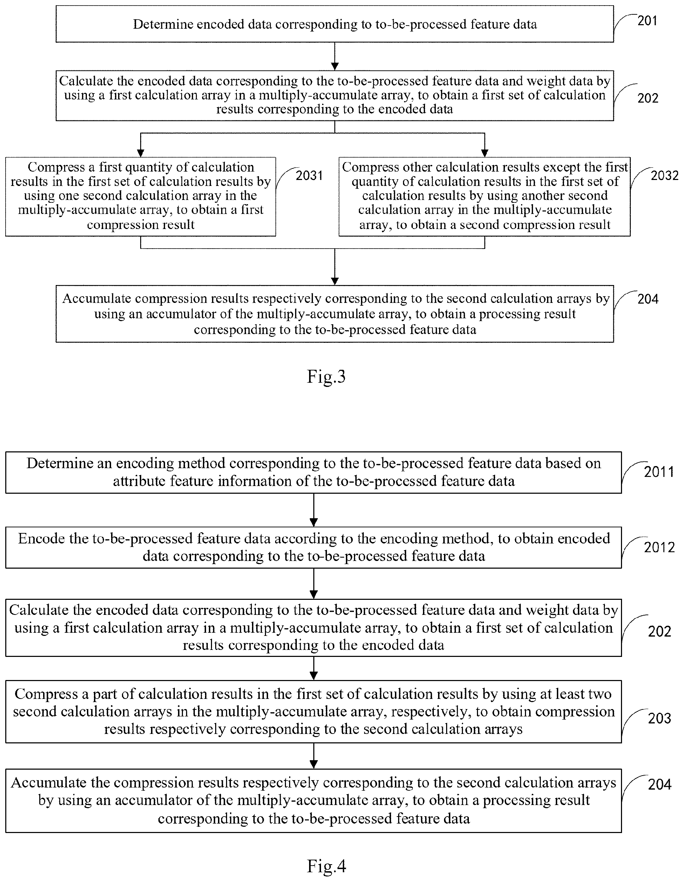

FIG. 3 is a schematic flowchart of a method of processing feature data through a multiply-accumulate array according to another exemplary embodiment of this disclosure.

In some optional embodiments, as shown in FIG. 3, step 203 of compressing a part of calculation results in the first set of calculation results by using at least two second calculation arrays in the multiply-accumulate array, respectively, to obtain the compression results respectively corresponding to the second calculation arrays includes the following steps.

Step 2031. Compress a first quantity of calculation results in the first set of calculation results by using one second calculation array in the multiply-accumulate array, to obtain a first compression result.

In some optional embodiments, the first quantity may be determined based on the signal toggling probability of the batch sample feature data in the application scenario of the multiply-accumulate array. For example, statistics about signal toggling probabilities of a batch of sample feature data may be collected. Based on the signal toggling probabilities, a quantity of bits with signal toggling probabilities less than a probability threshold may be determined as the first quantity.

For example, statistics about a quantity of bits with higher-order signal toggling probabilities less than the probability threshold (for example, 0.1 or 0.2) may be collected, and the quantity of the bits with the higher-order signal toggling probabilities less than the probability threshold may be used as the first quantity. In this way, the first quantity of calculation results with higher-order signal toggling probabilities less than the probability threshold are compressed by using the second calculation array.

Step 2032. Compress other calculation results except the first quantity of calculation results in the first set of calculation results by using another second calculation array in the multiply-accumulate array, to obtain a second compression result.

The another second calculation array is configured to compress the other calculation results except the foregoing first quantity of calculation results. For example, other calculation results with relatively high toggling probabilities (for example, greater than the probability threshold), except the calculation results of the bits with the higher-order signal toggling probabilities less than the probability threshold are compressed.

In some optional embodiments, if an operation to be performed also includes bias data, for example, the convolution operation may include a convolution weight and a bias, the bias data and the other calculation results except the first quantity of calculation results in the first set of calculation results may be compressed by using another second calculation array in the multiply-accumulate array, to obtain the second compression result.

In the embodiments, the first set of calculation results may be divided into two parts, and the two parts of calculation results are respectively compressed by using two second calculation arrays to obtain two compression results, that is, the first compression result and the second compression result. This helps to compress the first quantity calculation results with relatively low higher-order bit toggling probabilities by using a same second calculation array, and compress other calculation results with relatively high toggling probabilities by using the other second calculation array, thereby effectively reducing overall signal toggling of the multiply-accumulate array circuit and thus reducing the power consumption of the multiply-accumulate array.

FIG. 4 is a schematic flowchart of a method of processing feature data through a multiply-accumulate array according to still another exemplary embodiment of this disclosure.

In some optional embodiments, as shown in FIG. 4, step 201 of determining the encoded data corresponding to the to-be-processed feature data includes the following steps.

Step 2011. Determine an encoding method corresponding to the to-be-processed feature data based on attribute feature information of the to-be-processed feature data.

The attribute feature information of the to-be-processed feature data may include a data type of the to-be-processed feature data, and may also include other related feature information. The data type may include, for example, a signed integer or an unsigned integer. The signed integer may include a signed positive integer, a zero, and a signed negative integer.

In some optional embodiments, the encoding method corresponding to the to-be-processed feature data may be any one of a sign-and-magnitude encoding, a two's complement encoding, and a ones' complement encoding. For example, if the to-be-processed feature data is an unsigned integer, the encoding method may be the sign-and-magnitude encoding. If the to-be-processed feature data is a signed integer, the encoding method may be the two's complement encoding. Alternatively, the two's complement encoding or the ones' complement encoding may be adopted for the signed negative integer.

Step 2012. Encode the to-be-processed feature data according to the encoding method, to obtain the encoded data corresponding to the to-be-processed feature data.

After the encoding method corresponding to the to-be-processed feature data is determined, the to-be-processed feature data may be encoded according to the encoding method to obtain the encoded data corresponding to the to-be-processed feature data.

For example, the to-be-processed feature data is an unsigned integer 8 (00001000). Taking 8-bit encoding as an example, encoded data corresponding to the unsigned integer 8 may be represented as 00001000 based on a sign-and-magnitude of 00001000. If the to-be-processed feature data is a signed negative integer 8 (11111000), corresponding encoded data may be represented either as 00001000 based on a two's complement of 11111000 or as 00000111 based on a ones' complement of 11111000. If the to-be-processed feature data is a signed positive integer 8 (00001000), corresponding encoded data may be represented as 00001000 based on a sign-and-magnitude of 00001000. In view of the above, for the signed negative integer, signal toggling caused by sign bit extension may be reduced through encoding; and for feature data with a smaller absolute value, a higher-order bit may be made 0 through encoding, thereby helping to reduce the signal toggling probability of the feature data.

In the embodiments, the encoding method of the to-be-processed feature data is determined, and the encoded data corresponding to the to-be-processed feature data is obtained according to the encoding method. This helps to reduce the signal toggling probability of the feature data, thereby reducing the power consumption of the multiply-accumulate array.

In some optional embodiments, step 2011 of determining the encoding method corresponding to the to-be-processed feature data based on the attribute feature information of the to-be-processed feature data includes:

determining a data type of the to-be-processed feature data based on the attribute feature information; and determining the encoding method corresponding to the to-be-processed feature data based on the data type.

The data type of the to-be-processed feature data may include a signed number or an unsigned number. The signed number may include a signed positive number, a zero, and a signed negative number.

In some optional embodiments, the attribute feature information of the to-be-processed feature data may include the data type of the to-be-processed feature data. Therefore, the data type of the to-be-processed feature data may be determined based on the attribute feature information.

In some optional embodiments, for different data types, different encoding methods may be adopted, so as to facilitate calculations related to multiply-add for different types of to-be-processed feature data.

In some optional embodiments, an encoding method of input data of the multiply-accumulate array may be predetermined according to a practical application scenario of the multiply-accumulate array. In this case, the to-be-processed feature data may be encoded directly according to the determined encoding method, so as to obtain the encoded data corresponding to the to-be-processed feature data.

In some optional embodiments, determining the encoding method corresponding to the to-be-processed feature data based on the data type includes: in response to that the data type is a signed positive integer or zero, determining that the encoding method is a sign-and-magnitude encoding; in response to that the data type is a signed negative integer, determining that the encoding method is a ones' complement encoding or a two's complement encoding; and in response to that the data type is an unsigned integer, determining that the encoding method is the sign-and-magnitude encoding.

The ones' complement encoding refers to taking a ones' complement for a signed negative integer represented by using a two's complement. The signed negative integer is encoded according to the ones' complement encoding, and a ones' complement is taken for a two's complement of the negative integer to serve as the encoded data corresponding to the to-be-processed feature data. For example, encoded data corresponding to -8 is represented by using encoded data 00000111 that is obtained by taking a ones' complement for a two's complement 11111000. The two's complement encoding refers to taking a two's complement for a signed negative integer represented by using a two's complement, that is, adding 1 to the ones' complement that is obtained according to the ones' complement encoding, to obtain an encoding result of the two's complement encoding. For example, encoded data obtained for -8 according to the ones' complement encoding is represented by using encoded data 00001000 that is obtained by taking a two's complement for the two's complement 11111000. In view of the above, if a negative integer with a small absolute value is encoded according to the ones' complement encoding or the two's complement encoding, a higher-order bit of the obtained encoded data is usually 0. Thus, a higher-order signal toggling probability may be reduced.

In practical applications, the encoding method for the signed negative number may be set to either the one's complement encoding or the two's complement encoding according to actual requirements.

In the embodiments, the signed negative integer is encoded according to the one's complement encoding or the two's complement encoding to obtain encoded data. This helps to reduce the higher-order signal toggling probability, thereby further reducing circuit power consumption of the multiply-accumulate array.

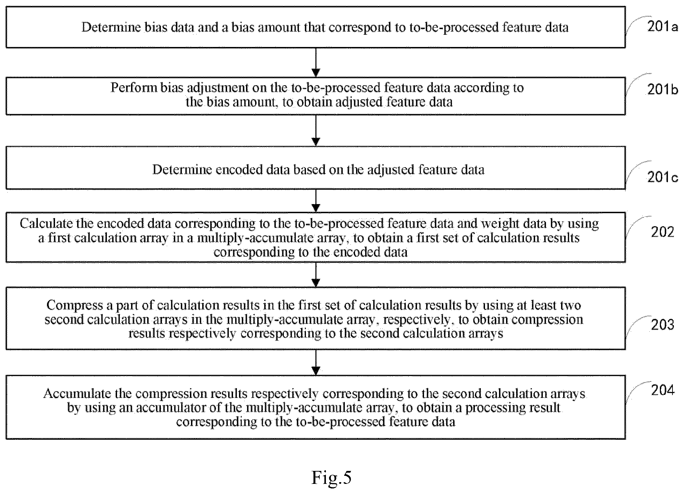

FIG. 5 is a schematic flowchart of a method of processing feature data through a multiply-accumulate array according to yet another exemplary embodiment of this disclosure.

In some optional embodiments, as shown in FIG. 5, step 201 of determining the encoded data corresponding to the to-be-processed feature data includes the following steps.

Step 201a. Determine bias data and a bias amount that correspond to the to-be-processed feature data.

The bias data is a bias term used to bias a calculation result of the to-be-processed feature data and the weight data. For example, a convolution operation is represented by using Feature*Weight+Bias, wherein Feature represents the to-be-processed feature data, Weight represents the weight data, and Bias represents the bias data. The bias amount is an adjustment amount for performing a bias adjustment on the to-be-processed feature data, so that an absolute value of the adjusted feature data is relatively small, which helps to reduce a higher-order bit toggling probability.

In some optional embodiments, the bias amount may be determined and stored in advance. For example, statistics about a mode feature value may be collected in advance based on a batch of sample feature data, and the mode feature value is used as the bias amount.

In some optional embodiments, the bias amount may also be determined in a real-time manner based on historical feature data of the multiply-accumulate array on which operations have been completed. For example, a certain amount of completed historical feature data of the current multiply-accumulate array may be obtained. Statistics about a mode feature value of the historical feature data is collected, and the mode feature value is used as the bias amount.

Step 201b. Perform bias adjustment on the to-be-processed feature data according to the bias amount, to obtain adjusted feature data.

For example, the bias amount is represented by using offset, and the adjusted feature data may be represented by using Feature-offset, wherein Feature represents the to-be-processed feature data.

Step 201c. Determine the encoded data based on the adjusted feature data.

A specific operating principle for determining the encoded data based on the adjusted feature data is consistent with the principle for determining the encoded data based on the to-be-processed feature data. For example, an encoding method of the adjusted feature data is determined based on attribute feature information of the adjusted feature data, and the adjusted feature data is encoded according to the encoding method to obtain the encoded data.

In the embodiments, bias adjustment is performed on the to-be-processed feature data based on the mode feature value, so that the mode feature value of the adjusted feature data may be 0 or may have a relatively small absolute value. This helps to reduce the signal toggling probability of the encoded data of the adjusted feature data, thereby further reducing the power consumption of the multiply-accumulate array.

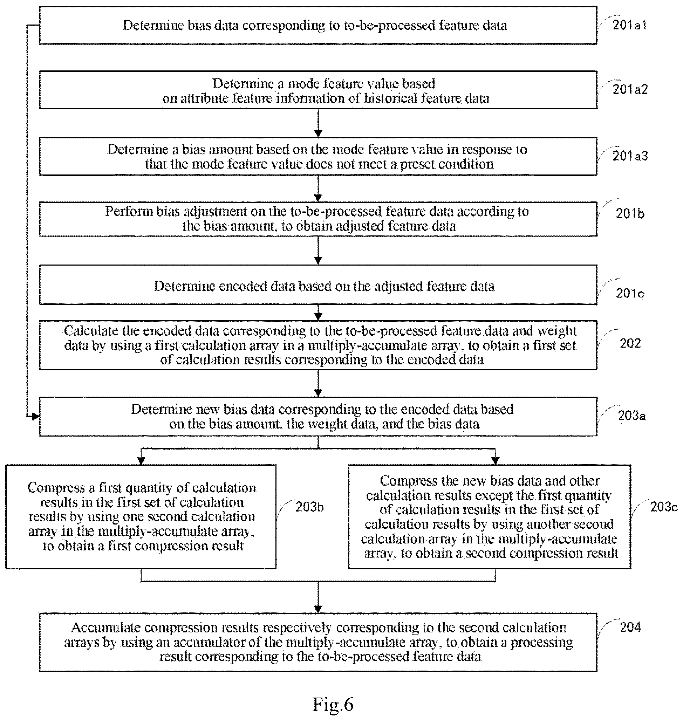

FIG. 6 is a schematic flowchart of a method of processing feature data through a multiply-accumulate array according to still yet another exemplary embodiment of this disclosure.

In some optional embodiments, as shown in FIG. 6, step 201a of determining the bias data and the bias amount that correspond to the to-be-processed feature data includes the following steps.

Step 201a1. Determine bias data corresponding to the to-be-processed feature data.

Step 201a2. Determine a mode feature value based on attribute feature information of historical feature data.

The historical feature data includes feature data historically processed by the multiply-accumulate array.

In some optional embodiments, the attribute feature information of the historical feature data may include a distribution feature of the historical feature data, and the mode feature value may be determined based on the distribution feature.

Step 201a3. Determine the bias amount based on the mode feature value in response to that the mode feature value does not meet a preset condition.

The preset condition may include that the mode feature value is a preset value, such as 0. If the mode feature value does not meet the preset condition, it indicates that the mode feature value of the historical feature data is not 0. To further reduce the signal toggling probability corresponding to the encoded data, the bias amount may be determined based on the mode feature value. For example, the mode feature value is encoded, and an encoding result is used as the bias amount for adjusting the to-be-processed feature data.

In some optional embodiments, the bias amount may be subtracted from the to-be-processed feature data, so that the mode feature value of the adjusted feature data meets the preset condition, so as to further reduce the signal toggling probability of the encoded data of the adjusted feature data, thereby further reducing the power consumption of the multiply-accumulate array.

In some optional embodiments, an adjusted portion of the to-be-processed feature data, such as the subtracted bias amount, may be placed in the bias term, thereby ensuring accuracy of the calculation result.

It should be noted that steps 201a2 to 201a3, and 201a1 are not in a sequential order.

In the embodiments, the mode feature value is determined based on processed historical feature data of the multiply-accumulate array to perform bias adjustment on the to-be-processed feature data, so that an overall mode feature value of the adjusted feature data can meet the preset condition. For example, the mode feature value is 0 or the absolute value is relatively small, which helps to reduce the signal toggling probability of each bit. A relatively small absolute value of the adjusted feature data helps to reduce a higher-order bit toggling probability of the encoded data, for example, makes the higher-order bit toggling probability less than the probability threshold. This facilitates compression in groups, thereby further reducing the power consumption of the multiply-accumulate array.

In some optional embodiments, as shown in FIG. 6, step 201a2 of determining the mode feature value based on the attribute feature information of the historical feature data includes: determining feature value distribution information of the historical feature data based on the attribute feature information of the historical feature data; and determining the mode feature value based on the feature value distribution information.

The attribute feature information of the historical feature data may include feature value distribution information (that is, a distribution feature) of the to-be-processed feature data. Therefore, the feature value distribution information of the historical feature data may be determined based on the attribute feature information of the historical feature data. The feature value distribution information may include distribution of all feature values of the historical feature data on each feature value (which may be referred to as a reference feature value) within an feature value range. For example, the feature value range is 0-100, and the feature value distribution information may include distribution of all feature values in the historical feature data on 0, 1, 2, ..., and 100. For example, in the historical feature data, there are a1 feature values distributed on 24, a2 feature values distributed on 50, and a3 feature values distributed on 88. This distribution is used as the feature value distribution information of the historical feature data.

In some optional embodiments, the mode feature value is an feature value on which a largest quantity of feature values are distributed. For example, if a3 is the largest in the foregoing example, 88 is the mode feature value.

In the embodiments, the feature value distribution information is determined based on the attribute feature information of the historical feature data, and then the mode feature value is determined based on the feature value distribution information, so as to facilitate bias adjustment on the to-be-processed feature data, thereby reducing a signal toggling probability of the adjusted feature data.

In some optional embodiments, as shown in FIG. 6, step 203 of compressing a part of calculation results in the first set of calculation results by using at least two second calculation arrays in the multiply-accumulate array, respectively, to obtain the compression results respectively corresponding to the second calculation arrays includes the following steps.

Step 203a. Determine new bias data corresponding to the encoded data based on the bias amount, the weight data, and the bias data.

A determining rule for the new bias data may be determined based on an operation relationship between the to-be-processed feature data, the adjusted feature data, the weight data, and the bias data; and then the new bias data may be determined according to the determining rule.

For example, before adjustment, an operation for the to-be-processed feature data (Feature), the weight data (Weight), and the bias data (Bias) is represented by using Feature*Weight+Bias. An operation for the adjusted feature data, the weight data, and the bias data is represented by using (Feature-offset)*Weight+Bias'; and the adjusted feature data is represented by using Feature-offset. According to a relationship between the two operations, the determining rule for the new bias data Bias' may be obtained, which may be represented by using, for example, offset*Weight+Bias.

Step 203b. Compress a first quantity of calculation results in the first set of calculation results by using one second calculation array in the multiply-accumulate array, to obtain a first compression result.

The first quantity may be determined based on a signal toggling probability of adjusted sample feature data corresponding to the batch sample feature data. A part of calculation results of bits with low signal toggling probabilities are compressed by using the same second calculation array in the multiply-accumulate array. For example, the first quantity of calculation results with higher-order bit signal toggling probabilities less than the probability threshold are compressed by using the second calculation array, to obtain the first compression result.

Step 203c. Compress the new bias data and other calculation results except the first quantity of calculation results in the first set of calculation results by using another second calculation array in the multiply-accumulate array, to obtain a second compression result.

When there is the bias data, it is needed to add a product of the encoded data and the weight data to the bias data. Therefore, during compression, the new bias data may be compressed with other calculation results by using another second calculation array, to obtain the second compression result.

In some optional embodiments, the new bias data may also be compressed with the first quantity of calculation results in the second calculation array in step 203b.

In the embodiments, when bias adjustment is performed on the to-be-processed feature data, the new bias data corresponding to the encoded data is determined based on the bias amount, the weight data, and the bias data, so that an adjusted part of the to-be-processed feature data is placed into the bias term, thereby ensuring accuracy and effectiveness of the processing result of the to-be-processed feature data.

In some optional embodiments, step 203a of determining the new bias data corresponding to the encoded data based on the bias amount, the weight data, and the bias data includes: determining a product of the bias amount and the weight data; and using a sum of the product and the bias data as the new bias data.

For example, the new bias data may be represented by using Bias'=offset*Weight+Bias.

In the embodiments, the sum of the product of the bias amount and the weight data and the original bias data is used as the new bias data, so that the new bias data is effectively determined. The bias amount adjusted from the to-be-processed feature data is accurately reflected in the new bias data, thereby ensuring accuracy and effectiveness of the calculation result.

In some optional embodiments, step 203a of determining the new bias data corresponding to the encoded data based on the bias amount, the weight data, and the bias data includes:

in response to that an encoding method is a ones' complement encoding, determining the new bias data based on the bias amount, the weight data, the bias data, and a difference between a ones' complement and a two's complement.

For a case where the encoding method is the ones' complement encoding, due to a difference of 1 between the ones' complement and the two's complement, this difference may be placed into the bias term to ensure correctness of the calculation result of the multiply-accumulate array of signed numbers.

For example, the new bias data corresponding the encoded data for which a ones' complement is taken may be represented by using Bias'=(offset+1)*Weight+Bias.

In some optional embodiments, step 201c of determining the encoded data based on the adjusted feature data includes: determining an encoding method corresponding to the adjusted feature data based on attribute feature information of the adjusted feature data; and encoding the adjusted feature data according to the encoding method, to obtain the encoded data.

The attribute feature information of the adjusted feature data may include a data type of the adjusted feature data, and may also include other related feature information. Encoding of the adjusted feature data is similar to steps 2011 and 2012, and details are not described herein.

It should be noted that bias adjustment for a signed number may change the data type. For example, the to-be-processed feature data is a signed positive number, if the bias amount is greater than the to-be-processed feature data, the adjusted feature data obtained by subtracting the bias amount may become a signed negative number. In this case, the encoding method is determined based on the data type of the adjusted feature data and the encoding is performed. For another example, the to-be-processed feature data is an unsigned number, if the bias amount is greater than the to-be-processed feature data, the adjusted feature data obtained by subtracting the bias amount from the to-be-processed feature data may also become a signed negative number. In this case, the encoding method is determined based on the data type of the adjusted feature data and the coding is performed.

In the embodiments, bias adjustment is performed on the to-be-processed feature data, so that a mode feature value of the adjusted feature data is 0 or may have a relatively small absolute value, and then encoding is performed in combination with the encoding method in this disclosure. This helps to reduce the higher-order signal toggling probability, thereby reducing the power consumption of the multiply-accumulate array.

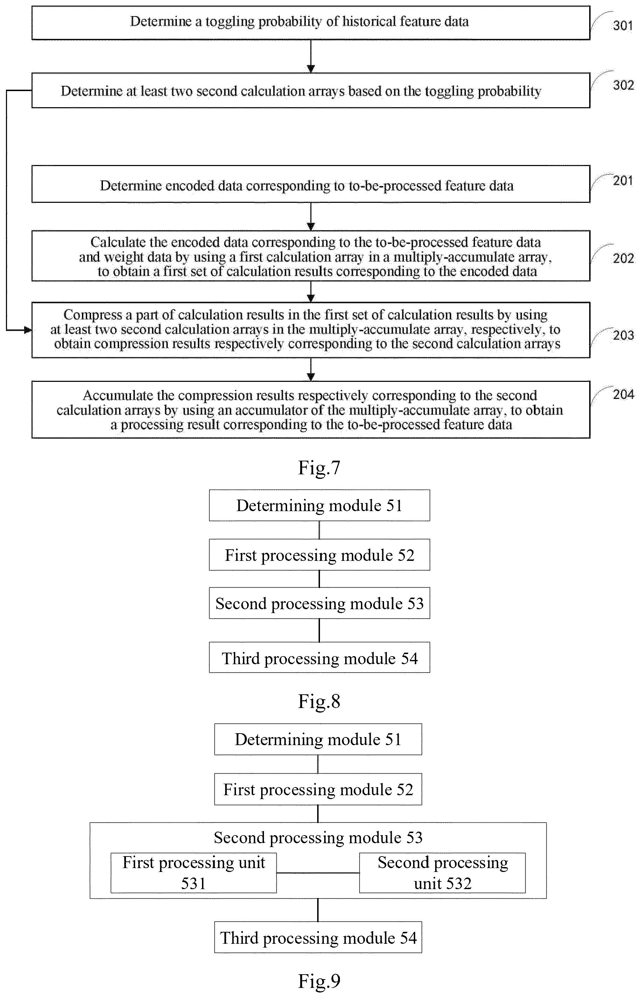

FIG. 7 is a schematic flowchart of a method of processing feature data through a multiply-accumulate array according to a further exemplary embodiment of this disclosure.

In some optional embodiments, as shown in FIG. 7, before respectively compressing a part of calculation results in the first set of calculation results by using at least two second calculation arrays in the multiply-accumulate array to obtain the compression results respectively corresponding to the second calculation arrays, the method in the embodiments of this disclosure further includes the following steps.

Step 301. Determine a toggling probability of the historical feature data.

For the toggling probability (that is, the signal toggling probability), reference may be made to the content described above. The toggling probability may include a toggling probability corresponding to each bit of the historical feature data. The toggling probability corresponding to each bit may be determined based on a signal value (0 or 1) of each feature value in the historical feature data at that bit.

Step 302. Determine the at least two second calculation arrays based on the toggling probability.

At least one probability threshold may be set based on the toggling probability. Based on the probability threshold, calculation results of bits with similar toggling probabilities are placed in a same set, and calculation results of bits with significant differences in toggling probabilities are placed in different sets. Each set of calculation results is used as a part of the calculation results. For example, one probability threshold (such as 0.1) is used as an example. According to the historical feature data, it is obtained through statistics collection that, signal toggling probabilities of 3 higher-order bits in 8 bits are less than (or equal to) the probability threshold, while signal toggling probabilities of 5 lower-order bits are greater than the probability threshold. In this case, calculation results of the 3 higher-order bits may be compressed by using one second calculation array, and calculation results of the 5 lower-bit bits may be compressed by using another second calculation array, so that the overall signal toggling rate of the multiply-accumulate array is reduced, thereby reducing the power consumption of the multiply-accumulate array. For another example, two probability thresholds are used as an example. For example, a first probability threshold (such as 0.1) and a second probability threshold (such as 0.6) are included. Based on the toggling probability, the first probability threshold, and the second probability threshold, various bits of the feature data may be classified into three sets, so that three second calculation arrays may be determined. For example, according to the historical feature data, it is obtained through statistics collection that, signal toggling probabilities of 3 higher-order bits in 8 bits are less than (or equal to) the first probability threshold; signal toggling probabilities of 3 middle bits are greater than the first probability threshold and less than the second probability threshold; and signal toggling probabilities of 2 lower-order bits are greater than the second probability threshold. In this case, calculation results of the 3 higher-order bits may be compressed by using one second calculation array, calculation results of the 3 middle bits may be compressed by using another second calculation array, and calculation results of the 2 lower-bit bits may be compressed by using still another second calculation array. Thus, three second calculation arrays are determined.

According to the method of processing feature data through a multiply-accumulate array in the embodiments of this disclosure, the feature data to be processed by the multiply-accumulate array is encoded in different ways according to the data type, and one's complement encoding is performed on the signed negative integer, thus helping to reduce the signal toggling caused by the sign bit extension. Performing bias adjustment on feature data with a non-zero distribution center helps to reduce a higher-order signal toggling probability of the encoded data of the feature data, thereby reducing a signal toggling rate of the first calculation array. Thus, the first set of calculation results is grouped and compressed based on the signal toggling probability. Reducing a signal toggling rate of the second calculation array may effectively reduce the overall signal toggling rate of the multiply-accumulate array circuit, thereby reducing the power consumption of the multiply-accumulate array circuit. Because a series of processing is performed on the input feature data of the multiply-accumulate array, it is convenient to group the second calculation arrays according to specific application scenarios of the multiply-accumulate array, so as to achieve group compression. Thus, in-depth power consumption optimization may be performed in various application scenarios, thereby effectively reducing power consumption of the circuit.

The foregoing embodiments of this disclosure may be implemented separately or in any combination without conflict. This may be specifically set according to actual requirements, and is not limited in this disclosure.

Any method of processing feature data through a multiply-accumulate array provided in the embodiments of this disclosure may be implemented by any suitable device with a data processing capability, including but not limited to a terminal device and a server. Alternatively, any method of processing feature data through a multiply-accumulate array provided in the embodiments of this disclosure may be implemented by a processor. For example, the processor implements any method of processing feature data through a multiply-accumulate array described in the embodiments of this disclosure by invoking corresponding instructions stored in the memory. Details are not described below again.

### Exemplary apparatus

FIG. 8 is a schematic diagram of a structure of an apparatus for processing feature data through a multiply-accumulate array according to an exemplary embodiment of this disclosure. The apparatus in this embodiment may be configured to implement the corresponding embodiments of the method of processing feature data through a multiply-accumulate array in this disclosure. The apparatus shown in FIG. 8 includes a determining module 51, a first processing module 52, a second processing module 53, and a third processing module 54.

The determining module 51 is configured to determine encoded data corresponding to to-be-processed feature data.

The first processing module 52 is configured to calculate the encoded data corresponding to the to-be-processed feature data and weight data by using a first calculation array in the multiply-accumulate array, to obtain a first set of calculation results corresponding to the encoded data.

The second processing module 53 is configured to compress a part of calculation results in the first set of calculation results by using at least two second calculation arrays in the multiply-accumulate array, respectively, to obtain compression results respectively corresponding to the second calculation arrays. Each part of calculation results includes at least one calculation result in the first set of calculation results.

The third processing module 54 is configured to accumulate the compression results respectively corresponding to the second calculation arrays by using an accumulator of the multiply-accumulate array, to obtain a processing result corresponding to the to-be-processed feature data.

FIG. 9 is a schematic diagram of a structure of an apparatus for processing feature data through a multiply-accumulate array according to another exemplary embodiment of this disclosure.

In some optional embodiments, as shown in FIG. 9, the second processing module 53 includes:
a first processing unit 531, configured to compress a first quantity of calculation results in the first set of calculation results by using one second calculation array in the multiply-accumulate array, to obtain a first compression result; and
a second processing unit 532, configured to compress other calculation results except the first quantity of calculation results in the first set of calculation results by using another second calculation array in the multiply-accumulate array, to obtain a second compression result.

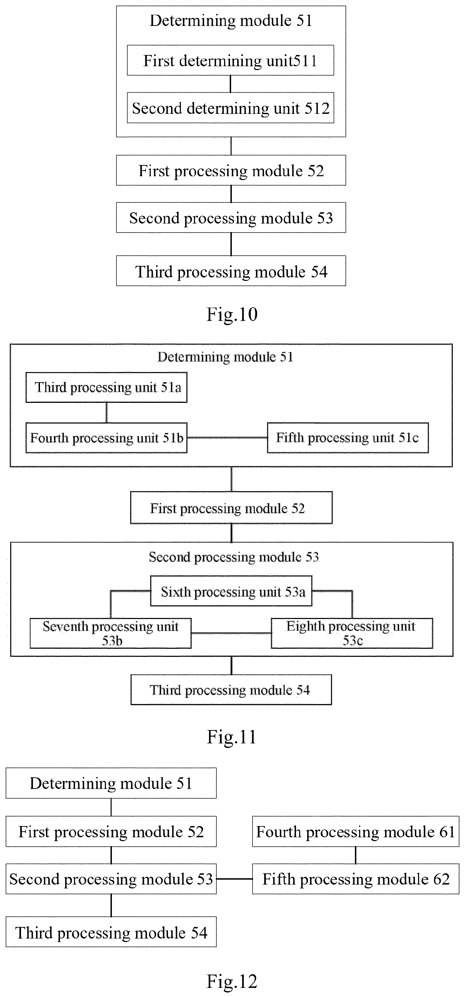

FIG. 10 is a schematic diagram of a structure of an apparatus for processing feature data through a multiply-accumulate array according to still another exemplary embodiment of this disclosure.

In some optional embodiments, as shown in FIG. 10, the determining module 51 includes a first determining unit 511 and a second determining unit 512.

The first determining unit 511 is configured to determine an encoding method corresponding to the to-be-processed feature data based on attribute feature information of the to-be-processed feature data.

The second determining unit 512 is configured to encode the to-be-processed feature data according to the encoding method, to obtain the encoded data corresponding to the to-be-processed feature data.

In some optional embodiments, the first determining unit 511 is specifically configured to: determine a data type of the to-be-processed feature data based on the attribute feature information; and determine the encoding method corresponding to the to-be-processed feature data based on the data type.

In some optional embodiments, the first determining unit 511 is specifically configured to: in response to that the data type is a signed positive integer or zero, determine that the encoding method is a sign-and-magnitude encoding; in response to that the data type is a signed negative integer, determine that the encoding method is a ones' complement encoding or a two's complement encoding; and in response to that the data type is an unsigned integer, determine that the encoding method is the sign-and-magnitude encoding.

FIG. 11 is a schematic diagram of a structure of an apparatus for processing feature data through a multiply-accumulate array according to yet another exemplary embodiment of this disclosure.

In some optional embodiments, as shown in FIG. 11, the determining module 51 includes a third processing unit 51a, a fourth processing unit 51b, and a fifth processing unit 51c.

The third processing unit 51a is configured to determine bias data and a bias amount that correspond to the to-be-processed feature data.

The fourth processing unit 51b is configured to perform bias adjustment on the to-be-processed feature data according to the bias amount, to obtain adjusted feature data.

The fifth processing unit 51c is configured to determine the encoded data based on the adjusted feature data.

In some optional embodiments, the third processing unit 51a is specifically configured to determine bias data corresponding to the to-be-processed feature data. A mode feature value is determined based on attribute feature information of historical feature data. The historical feature data includes feature data historically processed by the multiply-accumulate array. The bias amount is determined based on the mode feature value in response to that the mode feature value does not meet a preset condition.

In some optional embodiments, the third processing unit 51a is specifically configured to: determine feature value distribution information of the historical feature data based on the attribute feature information of the historical feature data; and determine the mode feature value based on the feature value distribution information.

In some optional embodiments, the second processing module 53 includes:
a sixth processing unit 53a, configured to determine new bias data corresponding to the encoded data based on the bias amount, the weight data, and the bias data;
a seventh processing unit 53b, configured to compress a first quantity of calculation results in the first set of calculation results by using one second calculation array in the multiply-accumulate array, to obtain a first compression result; and
an eighth processing unit 53c, configured to compress the new bias data and other calculation results except the first quantity of calculation results in the first set of calculation results by using another second calculation array in the multiply-accumulate array, to obtain a second compression result.

In some optional embodiments, the sixth processing unit 53a is specifically configured to: determine a product of the bias amount and the weight data; and use a sum of the product and the bias data as the new bias data.

In some optional embodiments, the sixth processing unit 53a is specifically configured to:

in response to that an encoding method is a ones' complement encoding, determine the new bias data based on the bias amount, the weight data, the bias data, and a difference between a ones' complement and a two's complement.

In some optional embodiments, the fifth processing unit 51c is specifically configured to: determine an encoding method corresponding to the adjusted feature data based on attribute feature information of the adjusted feature data; and encode the adjusted feature data according to the encoding method, to obtain the encoded data.

FIG. 12 is a schematic diagram of a structure of an apparatus for processing feature data through a multiply-accumulate array according to still yet another exemplary embodiment of this disclosure.

In some optional embodiments, as shown in FIG. 12, the apparatus in the embodiments of this disclosure further includes a fourth processing module 61 and a fifth processing module 62.

The fourth processing module 61 is configured to determine a toggling probability of the historical feature data.

The fifth processing module 62 is configured to determine the at least two second calculation arrays based on the toggling probability.

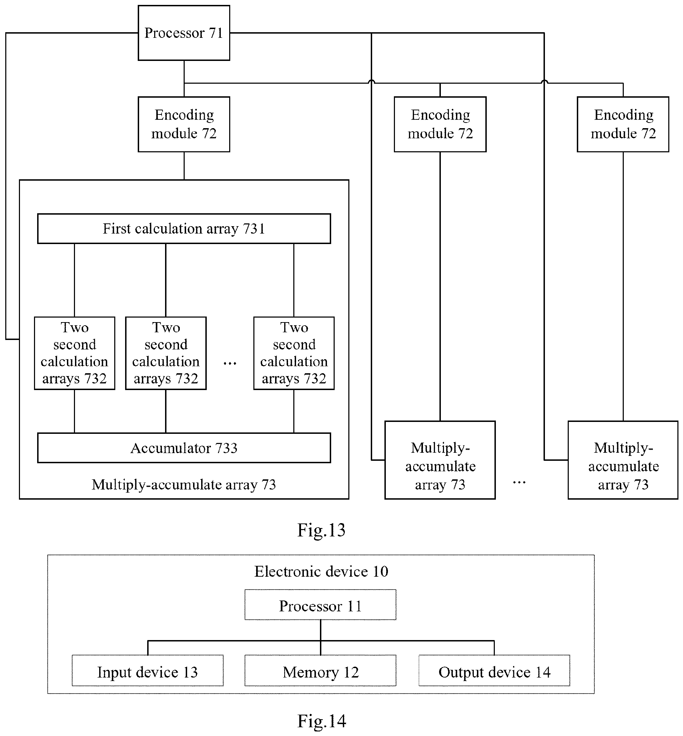

In some optional embodiments, FIG. 13 is a schematic diagram of a structure of an apparatus for processing feature data through a multiply-accumulate array according to a further exemplary embodiment of this disclosure. As shown in FIG. 13, the apparatus in the embodiments of this disclosure includes a processor 71, at least one encoding module 72, and at least one multiply-accumulate array 73. Each multiply-accumulate array 73 includes a first calculation array 731, at least two second calculation arrays 732, and an accumulator 733. The controller 71 is configured to control the encoding module 72 and the multiply-accumulate array 73 to perform encoding and calculated related operations. For example, the controller 71 controls the encoding module to encode the to-be-processed feature data, to obtain the encoded data corresponding to the to-be-processed feature data. The controller 71 controls the first calculation array 731 in the multiply-accumulate array 73 to calculate the encoded data and the weight data, so as to obtain the first set of calculation results. The controller 71 controls the second calculation arrays 732 to respectively compress each part of calculation results of the first set of calculation results to obtain compression results respectively corresponding to the second calculation arrays 732. The controller 71 controls the accumulator 733 to accumulate the compression results to obtain a processing result corresponding to the to-be-processed feature data.

In some optional embodiments, the apparatus in the embodiments of this disclosure may further include a memory, a buffer, and the like, to store and cache data during a calculation process. For example, the memory stores the to-be-processed feature data, the encoded data, the weight data, and the like. The buffer is configured to cache data provided to the encoding module 72 and the multiply-accumulate array 73.

For beneficial technical effects corresponding to the exemplary embodiments of this apparatus, reference may be made to the corresponding beneficial technical effects in the part of exemplary method described above, and details are not described herein again.

### Exemplary electronic device

FIG. 14 is a diagram of a structure of an electronic device according to an embodiment of this disclosure. The electronic device includes at least one processor 11 and a memory 12.

The processor 11 may be a central processing unit (CPU) or another form of processing unit having a data processing capability and/or an instruction execution capability, and may control another component in the electronic device 10 to implement a desired function.

The memory 12 may include one or more computer program products. The computer program product may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 11 may execute the one or more program instructions to implement the method according to various embodiments of this disclosure that are described above and/or other desired functions.

In an example, the electronic device 10 may further include an input device 13 and an output device 14. These components are connected to each other through a bus system and/or another form of connection mechanism (not shown).

The input device 13 may further include, for example, a keyboard and a mouse.

The output device 14 may output various information to the outside, and may include, for example, a display, a speaker, a printer, a communication network, and a remote output device connected by the communication network.

Certainly, for simplicity, FIG. 14 shows only some of components in the electronic device 10 that are related to this disclosure, and components such as a bus and an input/output interface are omitted. In addition, according to specific application situations, the electronic device 10 may further include any other appropriate components.

An embodiment of this disclosure further provides a neural network processor, including the apparatus for processing feature data through a multiply-accumulate array provided in any one of the foregoing embodiments.

### Exemplary computer program product and computer readable storage medium

In addition to the foregoing method and device, the embodiments of this disclosure may also provide a computer program product, which includes computer program instructions. When the computer program instructions are run by a processor, the processor is enabled to perform the steps, of the method according to the embodiments of this disclosure, that are described in the "exemplary method" part described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "exemplary method" part described above.

The computer readable storage medium may be one readable medium or any combination of a plurality of readable media. The readable medium may be a readable signal medium or a readable storage medium. The readable storage medium includes, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A method of processing feature data through a multiply-accumulate array (73), **characterized in that** the method comprises::
determining (201) encoded data corresponding to to-be-processed feature data;
calculating (202) the encoded data corresponding to the to-be-processed feature data and weight data by using a first calculation array (731) in the multiply-accumulate array (73), to obtain a first set of calculation results corresponding to the encoded data;
compressing (203) a part of calculation results in the first set of calculation results by using at least two second calculation arrays (732) in the multiply-accumulate array (73), respectively, to obtain compression results respectively corresponding to the second calculation arrays (732), wherein each part of calculation results comprises at least one calculation result in the first set of calculation results; and
accumulating (204) the compression results respectively corresponding to the second calculation arrays (732) by using an accumulator of the multiply-accumulate array (73), to obtain a processing result corresponding to the to-be-processed feature data.

2. The method according to claim 1, wherein the compressing (203) a part of calculation results in the first set of calculation results by using at least two second calculation arrays (732) in the multiply-accumulate array (73), respectively, to obtain compression results respectively corresponding to the second calculation arrays (732) comprises:
compressing (2031) a first quantity of calculation results in the first set of calculation results by using one second calculation array in the multiply-accumulate array (73), respectively, to obtain a first compression result; and
compressing (2032) other calculation results except the first quantity of calculation results in the first set of calculation results by using another second calculation array in the multiply-accumulate array (73), to obtain a second compression result.

3. The method according to claim 1, wherein the determining (201) encoded data corresponding to to-be-processed feature data comprises:
determining (201a) bias data and a bias amount that correspond to the to-be-processed feature data;
performing (201b) bias adjustment on the to-be-processed feature data according to the bias amount, to obtain adjusted feature data; and
determining (201c) the encoded data based on the adjusted feature data.

4. The method according to claim 3, wherein the determining a bias amount comprising:
determining (201a2) a mode feature value based on attribute feature information of historical feature data, wherein the historical feature data comprises feature data historically processed by the multiply-accumulate array (73); and
determining (201a3) the bias amount based on the mode feature value in response to that the mode feature value does not meet a preset condition.

5. The method according to claim 4, wherein the determining a mode feature value based on attribute feature information of historical feature data comprises:
determining feature value distribution information of the historical feature data based on the attribute feature information of the historical feature data; and
determining the mode feature value based on the feature value distribution information.

6. The method according to claim 3, wherein the compressing a part of calculation results in the first set of calculation results by using at least two second calculation arrays (732) in the multiply-accumulate array (73), respectively, to obtain compression results respectively corresponding to the second calculation arrays (732) comprises:
determining (203a) new bias data corresponding to the encoded data based on the bias amount, the weight data, and the bias data;
compressing (203b) a first quantity of calculation results in the first set of calculation results by using one second calculation array in the multiply-accumulate array (73), to obtain a first compression result; and
compressing (203c) the new bias data and other calculation results except the first quantity of calculation results in the first set of calculation results by using another second calculation array in the multiply-accumulate array (73), to obtain a second compression result.

7. The method according to claim 6, wherein the determining (203a) new bias data corresponding to the encoded data based on the bias amount, the weight data, and the bias data comprises:
determining a product of the bias amount and the weight data; and
using a sum of the product and the bias data as the new bias data.

8. The method according to claim 6, wherein the determining (203a) new bias data corresponding to the encoded data based on the bias amount, the weight data, and the bias data comprises:
in response to that an encoding method is a ones' complement encoding, determining the new bias data based on the bias amount, the weight data, the bias data, and a difference between a ones' complement and a two's complement.

9. The method according to any one of claims 3 to 8, wherein the determining the encoded data based on the adjusted feature data comprises:
determining an encoding method corresponding to the adjusted feature data based on attribute feature information of the adjusted feature data; and
encoding the adjusted feature data according to the encoding method, to obtain the encoded data.

10. The method according to claim 1, wherein the determining encoded data corresponding to to-be-processed feature data comprises:
determining (2011) an encoding method corresponding to the to-be-processed feature data based on attribute feature information of the to-be-processed feature data; and
encoding (2012) the to-be-processed feature data according to the encoding method, to obtain the encoded data corresponding to the to-be-processed feature data.

11. The method according to claim 10, wherein the determining an encoding method corresponding to the to-be-processed feature data based on attribute feature information of the to-be-processed feature data comprises:
determining a data type of the to-be-processed feature data based on the attribute feature information; and
determining the encoding method corresponding to the to-be-processed feature data based on the data type.

12. The method according to claim 11, wherein the determining the encoding method corresponding to the to-be-processed feature data based on the data type comprises:
in response to that the data type is a signed positive integer or zero, determining that the encoding method is a sign-and-magnitude encoding;
in response to that the data type is a signed negative integer, determining that the encoding method is a ones' complement encoding or a two's complement encoding; and
in response to that the data type is an unsigned integer, determining that the encoding method is the sign-and-magnitude encoding.

13. The method according to any one of claims 1 to 12, wherein, before the compressing a part of calculation results in the first set of calculation results by using at least two second calculation arrays (732) in the multiply-accumulate array (73), respectively, to obtain compression results respectively corresponding to the second calculation arrays (732), the method further comprises:
determining a toggling probability of the historical feature data; and
determining the at least two second calculation arrays (732) based on the toggling probability.

14. An apparatus for processing feature data through a multiply-accumulate array (73), **characterized in that** the apparatus comprises:
a determining module (51), configured to determine encoded data corresponding to to-be-processed feature data;
a first processing module (52), configured to calculate the encoded data corresponding to the to-be-processed feature data and weight data by using a first calculation array (731) in the multiply-accumulate array (73), to obtain a first set of calculation results corresponding to the encoded data;
a second processing module (53), configured to compress a part of calculation results in the first set of calculation results by using at least two second calculation arrays (732) in the multiply-accumulate array (73), respectively, to obtain compression results respectively corresponding to the second calculation arrays (732), wherein each part of calculation results comprises at least one calculation result in the first set of calculation results; and
a third processing module (54), configured to accumulate the compression results respectively corresponding to the second calculation arrays (732) by using an accumulator of the multiply-accumulate array (73), to obtain a processing result corresponding to the to-be-processed feature data.

15. A neural network processor, **characterized in that** the neural network processor comprises:
the apparatus for processing feature data through a multiply-accumulate array (73) according to claim 14.
